# EUROPEAN PATENT APPLICATION

(11) **EP 4 554 310 A1**
(43) Date of publication of application: **14.05.2025**
(21) Application number: 22949763.1
(22) Date of filing: 05.07.2022
(51) Int. Cl.: H04W 74/08, H04B 7/155, H04W 72/04

(54) **NETWORK-CONTROLLED REPEATER CONTROL METHOD AND APPARATUS, BASE STATION COMMUNICATION METHOD AND APPARATUS, AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2022/104007
(87) International publication number: WO 2024/007175

(57) **Abstract**

A network-controlled repeater control method and apparatus, a base station communication method and apparatus, and a storage medium. The control method comprises: determining that a repeater sends a physical random access channel to a base station; and stopping the repeater from forwarding a signal between the base station and a user equipment.

## Description

### FIELD

The present disclosure relates to the field of communication, and more particularly to a control method for a network-controlled repeater, a communication method for a base station, an apparatus and a storage medium.

### BACKGROUND

At present, a network-controlled repeater (NCR) is expected to be a key technology for extending coverage of a cell. By using a repeater to forward a signal transmitted by a user equipment or a base station, the coverage of the cell, particularly the coverage of blind spot areas, can be effectively extended.

After the repeater is connected to the base station, a link between the repeater and the base station may be subject to interference, which may affect the signal forwarded by the repeater from the user equipment or the base station.

### SUMMARY

Embodiments of the present disclosure provide a control method for a network-controlled repeater, a communication method for a base station, an apparatus and a storage medium to solve problems existing in related art.

According to a first aspect of the present disclosure, a control method for a network-controlled repeater is provided. The repeater is configured to forward a signal between a base station and a user equipment, and the control method includes:
determining that the repeater transmits a physical random access channel to the base station; and
causing the repeater to cease forwarding the signal between the base station and the user equipment.

According to a second aspect of the present disclosure, a communication method for a base station is provided. The method includes:
in response to receiving a physical random access channel transmitted by a network-controlled repeater, determining that the network-controlled repeater does not forward a signal between the base station and a user equipment.

According to a third aspect of the present disclosure, a control apparatus for a network-controlled repeater is provided. The network-controlled repeater is configured to forward a signal between a base station and a user equipment, and the control apparatus comprises:
a first determining module configured to determine that the repeater transmits a physical random access channel to the base station; and
a control module configured to cause the repeater to cease forwarding the signal between the base station and the user equipment.

According to a fourth aspect of the present disclosure, a communication apparatus for a base station is provided, and the communication apparatus comprises:
a response module configured to: in response to receiving a physical random access channel transmitted by a network-controlled repeater, determine that the network-controlled repeater does not forward a signal between the base station and a user equipment.

According to a fifth aspect of the present disclosure, a control apparatus for a network-controlled repeater is provided, including:
a first processor; and
a first memory for storing instructions executable by the processor;
in which the first processor is configured to execute the instructions to implement the control method described in the first aspect of the disclosure.

According to a sixth aspect of the present disclosure, a communication apparatus for a base station is provided, including:
a second processor; and
a second memory for storing instructions executable by the processor;
in which the second processor is configured to execute the instructions to implement the communication method described in the second aspect of the disclosure.

According to a seventh aspect of embodiments of the present disclosure, there is provided a non-transitory computer storage medium. The non-transitory computer storage medium has stored an executable program that, when executed by a third processor, causes the control method described in the first aspect of the disclosure or the communication method described in the second aspect of the disclosure to be implemented by the third processor.

In the technical solutions provided by the embodiments of the present disclosure, when the signal is forwarded between the user equipment and the base station through the repeater, since a physical random access channel can indicate whether a link between the base station and the repeater is affected, after determining that the repeater transmits the physical random access channel to the base station, the repeater will cease forwarding the signal between the base station and the user equipment in order to avoid affecting the signal between the base station and the user equipment that is forwarded by the repeater, thereby improving the accuracy of the signal transmission.

It is to be understood that both the foregoing general description and the following detailed description are illustrative and explanatory only and are not intended to limit the embodiments of the present disclosure.

### BRIEF DESCRIPTION OF THE DRAWINGS

The above mentioned and/or additional aspects and advantages of the present disclosure will be apparent and easily understood from the following description of embodiments in combination with the drawings, in which:
FIG. 1 is a schematic diagram of a wireless communication system according to an illustrative embodiment.
FIG. 2 is a control method for a network-controlled repeater according to an illustrative embodiment.
FIG. 3 is a control method for a network-controlled repeater according to an illustrative embodiment.
FIG. 4 is a control method for a network-controlled repeater according to an illustrative embodiment.
FIG. 5 is a control method for a network-controlled repeater according to an illustrative embodiment.
FIG. 6 is a control method for a network-controlled repeater according to an illustrative embodiment.
FIG. 7 is a control method for a network-controlled repeater according to an illustrative embodiment.
FIG. 8 is a control method for a network-controlled repeater according to an illustrative embodiment.
FIG. 9 is a control method for a network-controlled repeater according to an illustrative embodiment.
FIG. 10 is a communication timing diagram for a wireless communication system according to an illustrative embodiment.
FIG. 11 is a control apparatus for a network-controlled repeater according to an illustrative embodiment.
FIG. 12 is a block diagram of a control apparatus for a network-controlled repeater according to an illustrative embodiment.
FIG. 13 is a block diagram of a communication apparatus for a base station according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. They are merely examples of apparatuses and methods consistent with some aspects of the present disclosure as recited in the appended claims.

It should be noted that all actions to obtain signals, information or data in the present disclosure are carried out in accordance with the relevant data protection laws and policies of a country in which they are located, and with authorization granted by owners of the corresponding apparatus.

At present, NCR is expected to be the key technology for extending the coverage of the cell, which can be called a network-controlled repeater, a repeater that can directly amplify signals, an intelligent repeater, a network auxiliary repeater, a controllable repeater, etc., which in the following are referred to as a repeater. The repeater can consist of two parts: forwarding unit (NCR-Fwd) and mobile termination unit (NCR-MT). The forwarding unit communicates with a base station through a backhaul link, the forwarding unit communicates with a user equipment (UE) through an access link, and the forwarding unit amplifies and forwards uplink and downlink RF signals between the UE and gNB (Next generation NodeB). The NCR-MT communicates with the base station through a control link (C-link) to achieve information exchange between the NCR and the gNB. The C-link is implemented based on a Uu interface of NR.

By using the repeater to forward a signal transmitted by the UE or a base station, the coverage of the cell can be effectively extended, whereas after the repeater is connected to the base station, the link between the repeater and the base station may be interfered, which may affect the signal forwarded by the repeater from the UE or the base station.

In order to solve above problems, the present disclosure provides a control method for a network-controlled repeater, a communication method for the base station, an apparatus and a storage medium. First, an implementation environment of the embodiments of the present disclosure will be described below.

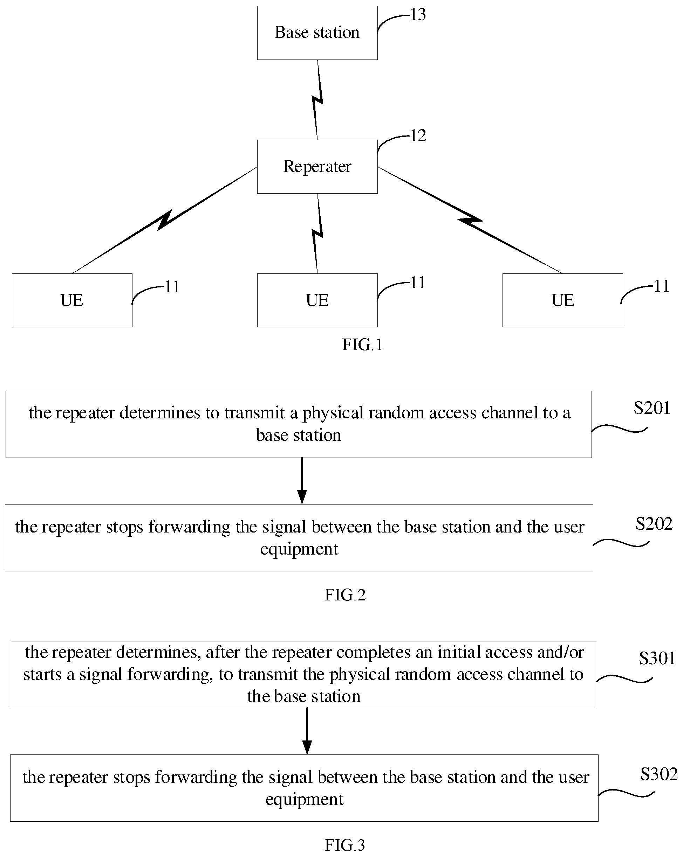

FIG. 1 is a schematic diagram of a wireless communication system according to an illustrative embodiment. As shown in FIG. 1, the wireless communication system includes several UEs 11, a repeater 12, and a base station 13.

The UEs 11 may be a device that provides voice and/or data connectivity to a user. The UEs 11 can communicate with one or more core networks via a radio access network (RAN), and the UEs 11 may be an Internet of Things (IoT) UE, such as a sensor device, a mobile phone (or called a "cellular" phone) and a computer including an IoT UE. For example, the UEs 11 may be a fixed device, a portable device, a pocket device, a hand-held device, a computer built-in device or a vehicle-mounted device. For example, the UEs 11 may be a station (STA), a subscriber unit, a subscriber station, a mobile station, a mobile, a remote station, an access point, a remote terminal, an access terminal, a user terminal, a user agent, a user equipment, or a user equipment. Alternatively, the UEs 11 may also be a device of an unmanned aerial vehicle. Alternatively, the UEs 11 may also be a vehicle-mounted device, for example, it may be a trip computer with a wireless communication function, or a wireless communication device connected externally to the trip computer. Alternatively, the UEs 11 may also be a roadside device. For example, it may be a street lamp, a signal lamp, or other roadside devices with a wireless communication function.

The repeater 12 may comprise the NCR-Fwd and the NCR-MT. The NCR-MT is used to receive and process control signals sent by the base station 13, with the function of a part of a terminal; and the NCR-Fwd is used to forward the signal from the base station 13 or the UEs 11.

In addition, RIS (Reconfigurable Intelligent Surface) or IRS (Intelligent Reflection Surface) is also known as "Intelligent Metasurface". RIS or IRS can be flexibly deployed in wireless communication propagation environments and enable manipulation of frequency, phase, polarization and other characteristics of the reflected or refracted electromagnetic waves for the purpose of reshaping the wireless channel. Specifically, the RIS can reflect signals incident on its surface to a specific direction by means of pre-coding techniques, thereby enhancing the signal strength at a receiving end and achieving control of channels.

Since a general repeater and the RIS have similar characteristics when interacting with the network, the repeater 12 can also be the RIS and the IRS.

The base station 13 may be a network device in the wireless communication system. The wireless communication system may be 4th generation (4G) mobile communication system, also known as a long term evolution (LTE) system, or the wireless communication system may be a 5G system, also called a New Radio (NR) system or 5G NR system. Alternatively, the wireless communication system may be a next-generation system of the 5G system.

The base station 13 may be an evolved node B (eNB) in a 4G system. Alternatively, the base station 13 may be a next-generation node B (gNB) adopting a centralized and distributed architecture in the 5G system. When the base station 13 adopts the centralized and distributed architecture, it generally includes a central unit (CU) and at least two distributed units (DU). The centralized unit is provided with a protocol stack of a packet data convergence protocol (PDCP) layer, a radio link control (RLC) layer, a media access control (MAC) layer. The distributed unit is provided with a physical (PHY) layer protocol stack. The specific implementation of the base station 13 is not limited in the embodiments of the present disclosure.

Each UE 11 can establish a wireless connection with the base station 13 through the repeater 12. Specifically, the UEs 11, whose signal can be forwarded by the NCR-Fwd of the repeater 12, can establish the wireless connection with the base station 13 via the wireless new radio. A link corresponding to a wireless connection established between the UEs 11 and the NCR-Fwd of the repeater 12 can be called the access link. A link corresponding to the wireless connection established between the base station 13 and the NCR-Fwd of the repeater 12 can be called the backhaul link. The base station 13 is able to establish a wireless connection with the NCR-MT of repeater 12 by means of the wireless new radio. A link corresponding to the wireless connection between the base station 13 and the NCR-MT of the repeater 12 can be called the control link. In different embodiments, the wireless new radio above is a wireless new radio based on the 4th generation (4G) mobile communication network technology standard, or the wireless new radio above is a wireless new radio based on the 5th generation (5G) mobile communication network technology standard, such as the wireless new radio is the NR, or the wireless new radio may be a wireless new radio based on the next generation of mobile communication network technology standards based on 5G.

Referring to FIG. 1, a signal of the UEs 11 can be forwarded by the repeater 12 to the base station 13. Similarly, the signal transmitted by the base station 13 can be forwarded by the repeater 12 to the UEs 11. It is worth noting that a UE within a coverage of the same base station can include a UE that performs the communication via the repeater and a UE that performs the communication not via the repeater. FIG. 1 is a schematic diagram of the UE 11 that performs the communication via the repeater.

To explain the a communication procedure of the wireless communication system of FIG. 1, the control signal that the base station 13 transmits to the NCR-MT of the repeater 12 indicating switching of a beam on the backhaul link is taken as an example. The base station 13 transmits the control signal to the NCR-MT, and after the NCR-MT receives and demodulates the control signal, the NCR-MT indicates the NCR-Fwd to perform the beam switching to switch the beam between the UE and the NCR-Fwd of the repeater. It should be noted that when the base station 13 communicates with the UE 11 via the repeater 12, the base station 13 uses multiple antennas to form the beams in different directions, and then transmits the signals on formed beams.

FIG. 2 is a control method for a network-controlled repeater according to an illustrative embodiment. As shown in FIG. 2, the method includes the following steps.

S201, the repeater determines to transmit a physical random access channel to a base station.

S202, the repeater ceases forwarding the signal between the base station and the user equipment.

An execution subject of the control method for a network controlled repeater provided by the embodiments of the present disclosure can be the repeater. The repeater communicates with the base station, and the repeater communicates with the UE. The base station of the embodiments of the present disclosure can be the base station 13 in the wireless communication system shown in FIG. 1, the repeater can be the repeater 12 in the wireless communication system shown in FIG. 1, and the UE can be any of the UEs 11 in the wireless communication system shown in FIG. 1.

In the embodiments of the present disclosure, the repeater can transmit the physical random access channel to the base station when a disconnection of the control link between the repeater and the base station occurs, or the repeater can transmit the physical random access channel to the base station when a beam recovery is performed between the repeater and the base station, or the repeater can transmit the physical random access channel to the base station when an uplink desynchronization occurs between the repeater and the base station. It should be understood that after above situations occur, the repeater transmits the physical random access channel to the base station.

In the embodiments of the present disclosure, the signal that the repeater ceases forwarding can be an uplink/downlink signal between the base station and the UE and forwarded by the repeater.

With above solutions, when the signal is forwarded between the UE and the base station by the repeater, since a physical random access channel can indicate whether the link between the base station and the repeater is affected, after determining that the repeater transmits the physical random access channel to the base station, the repeater will cease forwarding the signal between the base station and the UE in order to avoid affecting the signal between the base station and the UE that is forwarded by the repeater, thereby improving the accuracy of the signal transmission.

FIG. 3 is a control method for a network-controlled repeater according to an illustrative embodiment. As shown in FIG. 3, the method includes the following steps.

S301, the repeater determines, after the repeater completes an initial access and/or starts a signal forwarding, to transmit the physical random access channel to the base station.

S302, the repeater ceases forwarding the signal between the base station and the user equipment.

It should be noted that when the repeater is initially connected to the base station, the repeater transmits the physical random access channel to the base station. This physical random access channel is used by the repeater to request the initial establishment of communication with the base station. In the embodiments of the present disclosure, the physical random access channel is used to recover the control link between the repeater and the base station, which means to return to an undisrupted state. Referring to the example shown in FIG. 2 in which the repeater transmits the physical random access channel to the base station, the use of the physical random access channel in this embodiment will be explained. In the embodiments of the present disclosure, the physical random access channel transmitted to the base station can be used to recover the control link between the repeater and the base station, or the physical random access channel can be used to request a beam recovery between the repeater and the base station, after the repeater completes the initial access and/or starts the signal forwarding, or, this physical random access channel can be used to request the resynchronization between the repeater and the base station.

It should be noted that after the repeater transmits the physical random access channel to the base station, the repeater can assume that when the base station receives a transmitted physical random access channel, the base station can determine that the repeater has ceased forwarding the signal between the base station and the UE. At this time, the base station can cease transmitting a downlink signal to the repeater, and determine the downlink signal that has not been successfully transmitted, and after a communication between the base station and the repeater is recovered, the downlink signal that has not been successfully transmitted will be re-transmitted to the repeater, and the repeater will forward the downlink signal to the UE. It is understood that if the base station does not cease transmitting the downlink signal to the repeater, the transmission of the downlink signal may be interfered, thus affecting the accuracy of the signal, or a transmitted downlink signal cannot reach the repeater because the link is disconnected which will result in a resource waste.

With the above solutions, before the repeater is initially connected to the base station, there is no process in which the repeater has forwarded the signal between the base station and the UE, and therefore if the repeater ceases forwarding the signal between the base station and the UE, there is still resource overhead. Therefore, after the repeater determines that the initial access and/or starting the signal forwarding is completed, the physical random access channel is transmitted to the base station, and the repeater will cease forwarding the signal between the base station and the UE, so as to avoid causing invalid resources overhead.

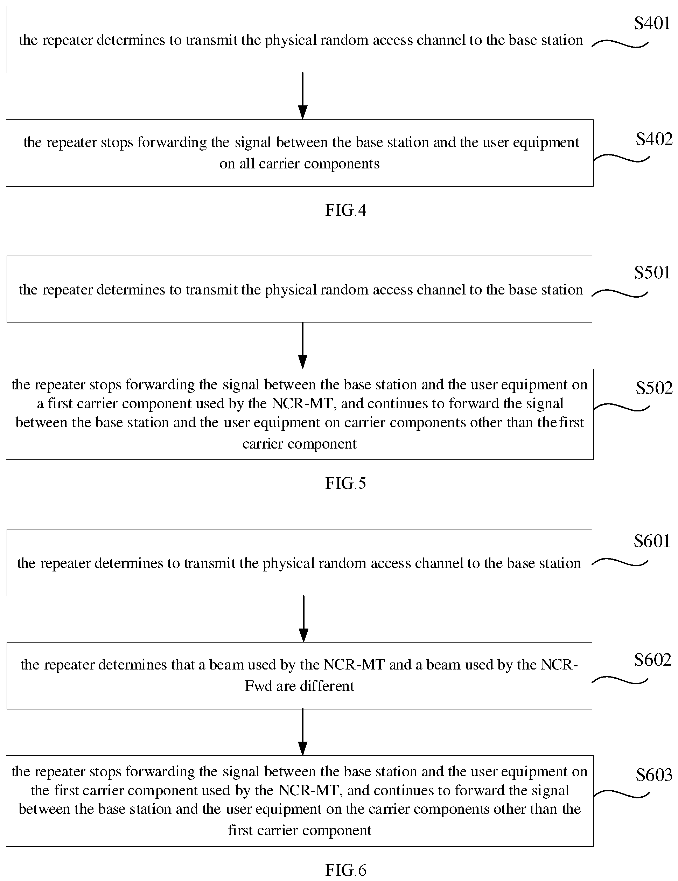

FIG. 4 is a control method for a network-controlled repeater according to an illustrative embodiment. As shown in FIG. 4, the method includes the following steps.

S401, the repeater determines to transmit the physical random access channel to the base station.

S402, the repeater ceases forwarding the signal between the base station and the user equipment on all carrier components.

The implementation of S401 can refer to related embodiments above, and details will not be repeated here in this embodiment.

It should be noted that in the wireless communication system shown in FIG. 1, carrier aggregation (also known as carrier-gathering) technology can be used to expand a transmission bandwidth to obtain a higher data rate, and each aggregated carrier is called a carrier component (CC). The CC here can be used as a frequency unit needed to realize the communication between the base station and the repeater.

With the above solutions, when the repeater transmits the physical random access channel to the base station, the link between the base station and the repeater may be interfered, and since the signal interference is random, the repeater can cease forwarding the signal on all the carrier components between the base station and the UE, in order to avoid affecting the signals on all the carrier components between the base station and the UE that are forwarded by the repeater, thereby improving the accuracy of the signal transmission.

FIG. 5 is a control method for a network-controlled repeater according to an illustrative embodiment. As shown above, the repeater can include two parts, which are the NCR-MT and the NCR-Fwd . In this case, as shown in FIG. 5, the method includes the following steps.

S501, the repeater determines to transmit the physical random access channel to the base station.

S502, the repeater ceases forwarding the signal between the base station and the user equipment on a first carrier component used by the NCR-MT, and continues to forward the signal between the base station and the user equipment on carrier components other than the first carrier component.

The implementation of S501 can refer to the related embodiments above, and details will not be repeated here in this embodiment.

With the above solutions, since the signal interference is random, when the first carrier component used by the NCR-MT is interfered, the carrier components other than the first carrier component may not be interfered. Therefore, the repeater can cease forwarding the signal on the first carrier component used by the NCR-MT between the base station and the UE and continue to forward the signal between the base station and the UE on the carrier components other than the first carrier component, in order to reduce a range in which the signal between the base station and the UE forwarded by the repeater is affected.

FIG. 6 is a control method for a network-controlled repeater according to an illustrative embodiment. As shown above, the repeater can include two parts, which are the NCR-Fwd and the NCR-MT. In this case, as shown in FIG. 6, the method includes the following steps.

S601, the repeater determines to transmit the physical random access channel to the base station.

S602, the repeater determines that a beam used by the NCR-MT and a beam used by the NCR-Fwd are different.

S603, the repeater ceases forwarding the signal between the base station and the user equipment on the first carrier component used by the NCR-MT, and continues to forward the signal between the base station and the user equipment on the carrier components other than the first carrier component.

The implementation of S601 can refer to the related embodiments above, and details will not be repeated here in this embodiment.

It should be noted that in the wireless communication, the base station can indicate the beam used by the NCR-MT and the NCR-Fwd. Therefore, the repeater can determine whether the beam used by the NCR-MT and the beam used by the NCR-Fwd are the same according to the beam indication information sent by the base station to the NCR-MT and the NCR-Fwd.

It should be noted that since the signal interference is random, even if the control link on the side of the NCR-MT is interfered, the possibility of interference on the link (the backhaul link and the access link) on the side of the NCR-Fwd is further reduced if the beam used by the NCR-MT is different from that used by the NCR-Fwd.

With the above solutions, after the repeater determines that the beam used by the NCR-MT and the beam used by the NCR-Fwd are different, it ceases forwarding the signal between the base station and the UE on the first carrier component used by the NCR-MT, and continue to forward the signal between the base station and the UE on the carrier components other than the first carrier component, in order to reduce the range where the signal between the base station and the UE forwarded by the repeater is affected.

In an embodiment, the transmission of the physical random access channel and the forwarding of the signal between the base station and the UE on the carrier components other than the first carrier component can be performed simultaneously.

In the present disclosure, the transmission of the physical random access channel of the NCR-MT and the forwarding of the NCR-Fwd can be performed simultaneously. That is, the transmission of the physical random access channel and the forwarding of the signal between the base station and the UE on the carrier components other than the first carrier component can be performed simultaneously. Thus, recovery of the control channel can be accelerated and waste of resources caused by the recovery of the control channel to the base station can be reduced.

It should be noted that the transmission and the forwarding being performed simultaneously here means that the repeater has the ability to transmit the physical random access channel and forward the signal between the base station and the UE at the same time. In practice, the repeater can choose to use this ability or not. In another embodiment, the repeater can choose not to use the ability, i.e. the transmission of the physical random access channel and the forwarding of the signal between the base station and the UE on the other carrier components can be transmitted according to the time-division multiplexing (TDM) technology.

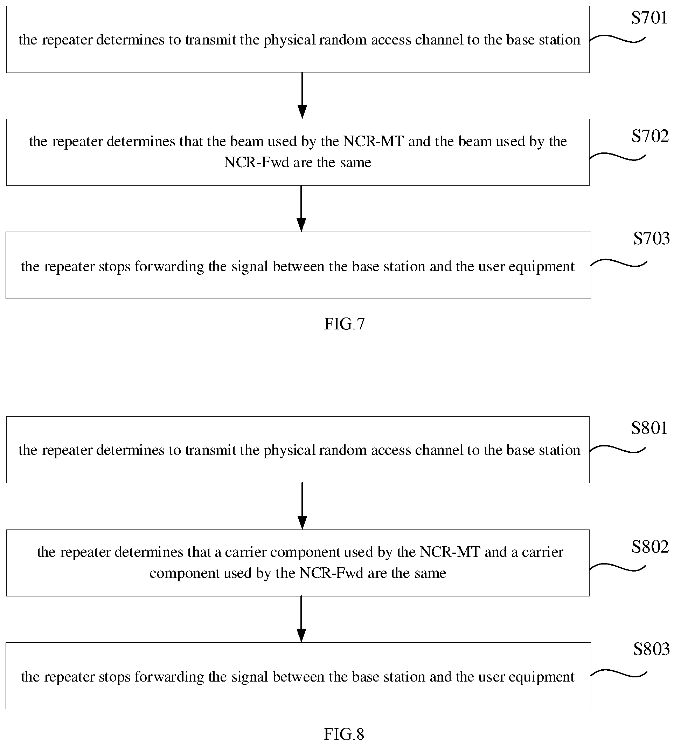

FIG. 7 is a control method for a network-controlled repeater according to an illustrative embodiment. As shown in FIG. 7, the method includes the following steps.

S701, the repeater determines to transmit the physical random access channel to the base station.

S702, the repeater determines that the beam used by the NCR-MT and the beam used by the NCR-Fwd are the same.

S703, the repeater ceases forwarding the signal between the base station and the user equipment.

The implementation of steps S701 to S703 can refer to the related embodiments above, and details will not be repeated here in this embodiment.

It should be noted that when the control link on the side of the NCR-MT is interfered, for example, in the event that a beam recovery needs to be performed , since the beam used by the NCR-MT is the same as that used by the NCR-Fwd, the beam used by the NCR-Fwd is more likely to be interfered.

With the above solutions, after the repeater determines that the beam used by the NCR-MT and the beam used by the NCR-Fwd are the same, it ceases forwarding the signal between the base station and the UE, which can effectively avoid affecting the signal between the base station and the UE and forwarded by the repeater.

FIG. 8 is a control method for a network-controlled repeater according to an illustrative embodiment. As shown in FIG. 8, the method includes the following steps.

S801, the repeater determines to transmit the physical random access channel to the base station.

S802, the repeater determines that a carrier component used by the NCR-MT and a carrier component used by the NCR-Fwd are the same.

S803, the repeater ceases forwarding the signal between the base station and the user equipment.

The implementation of steps S801 to S803 can refer to the related embodiments above, and details will not be repeated here in this embodiment.

In the present disclosure, in the wireless communication, the base station can indicate the carrier components used by the NCR-MT and the NCR-Fwd. Therefore, it can be determined whether the carrier components used by the NCR-MT and the NCR-Fwd are the same according to carrier component indication information sent to the NCR-MT and the NCR-Fwd from the base station.

It should be noted that when the control link on the side of the NCR-MT is interfered, sine the carrier component used by the NCR-MT and the carrier component used by the NCR-Fwd are the same, the NCR-Fwd is more likely to be interfered.

With the above solutions, after the repeater determines that the carrier component used by the NCR-MT and the carrier component used by the NCR-Fwd are the same, it ceases forwarding the signal between the base station and the UE, which can effectively avoid affecting the signal between the base station and the UE and forwarded by the repeater.

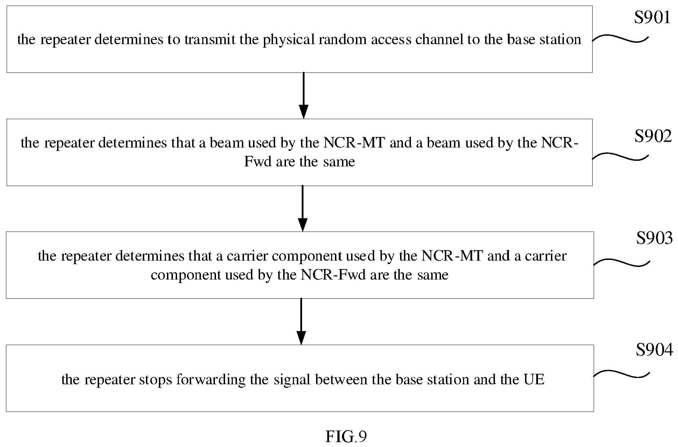

FIG. 9 is a control method for a network-controlled repeater according to an illustrative embodiment. As shown in FIG. 9, the method includes the following steps.

S901, the repeater determines to transmit the physical random access channel to the base station.

S902, the repeater determines that a beam used by the NCR-MT and a beam used by the NCR-Fwd are the same.

S903, the repeater determines that a carrier component used by the NCR-MT and a carrier component used by the NCR-Fwd are the same.

S904, the repeater ceases forwarding the signal between the base station and the UE.

The implementation of steps S901 to S904 can refer to the related embodiments above, and details will not be repeated here in this embodiment.

In addition, this embodiment does not limit the execution sequence of S902 and S903. In other embodiments, S903 may be executed before S902.

It should be noted that when the control link on the side of the NCR-MT is interfered, since the signal interference is random, it is possible that the beam or carrier component used by the NCR-Fwd will not be interfered when the beam or the carrier component used by the NCR-MT and the beam or the carrier component used by the NCR-Fwd are different.

With the above solutions, when the beam and the carrier component used by the NCR-MT and the beam and the carrier component used by the NCR-Fwd are the same, the repeater ceases forwarding the signal between the base station and the UE. This can effectively reduce a range in which the signal between the base station and the UE and forwarded by the repeater is affected, thereby improving the accuracy of signal transmission while reducing affecting the signal forwarding.

The present disclosure provides a communication method for a base station, and the communication method may include, in response to receiving a physical random access channel transmitted by a network-controlled repeater, determining that the network-controlled repeater does not forward a signal between the base station and a user equipment.

In an embodiment, the physical random access channel can be a physical random access channel transmitted by the repeater in response to an initial request for accessing the base station. In this embodiment, after the communication is successfully established between the base station and the repeater, the base station can begin transmitting the downlink signal to the repeater.

With the above solutions, the base station can determine a time to begin transmitting the downlink signal to the repeater, thereby avoiding transmitting an invalid downlink signal without successfully establishing the communication between the base station and the repeater, which results in a waste of resources.

In an embodiment, the physical random access channel can be a physical random access channel transmitted by the repeater requesting an access again, which occurs after the repeater completes an initial access and/or starts a signal forwarding. In this case, in response to receiving, by the base station, the physical random access channel transmitted by the network-controlled repeater, it is determined that the network-controlled repeater does not forward the signal between the base station and the user equipment, which may include: in response to the repeater transmitting the physical random access channel to the base station after completing the initial access and/or starting the signal forwarding, it is determined that the repeater ceases forwarding signals between the base station and the user equipment. In this embodiment, after the base station receives the physical random access channel transmitted by the repeater, the base station can determine that the repeater has ceased forwarding the signal between the base station and the user equipment, at which time the base station can cease transmitting the downlink signal to the repeater, so as to avoid interfering the transmission of the downlink signal and affecting the accuracy of the signals, or to avoid that a transmitted downlink signal cannot reach the repeater due to the disconnection of the link which results in a waste of resources.

In an embodiment, after the base station determines that the repeater does not forward signals between the base station and the user equipment, the base station can determine the downlink signal not successfully transmitted, and after the communication between the base station and the repeater is recovered, the downlink signal is re-transmitted to the repeater and forwarded by the repeater to the user equipment, thereby realizing the communication between the base station and the user equipment.

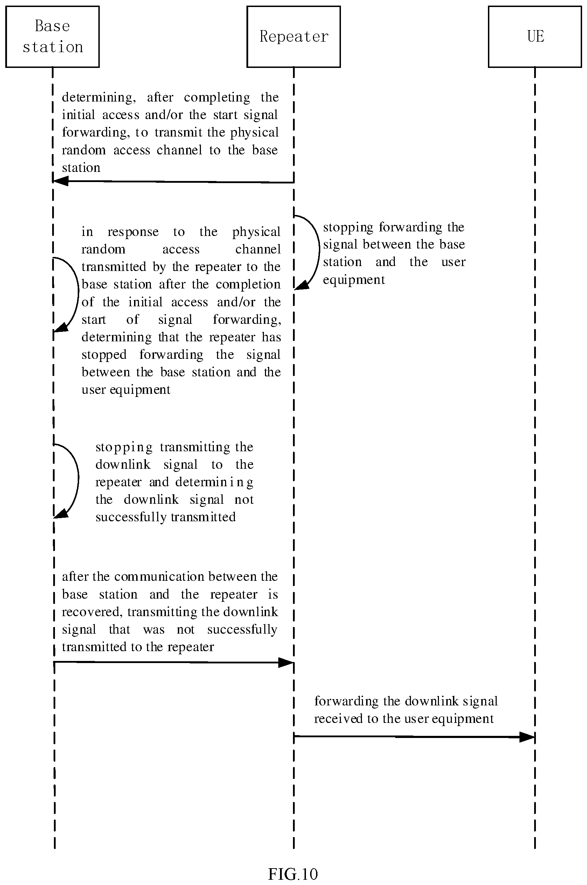

FIG. 10 is a communication timing diagram for a wireless communication system according to an illustrative embodiment, which is applied to the wireless communication system illustrated in FIG. 1. Referring to FIG. 9, the repeater determines that, after completing the initial access and/or the start signal forwarding, the repeater transmits the physical random access channel to the base station and ceases forwarding the signal between the base station and the user equipment. In response to the physical random access channel transmitted by the repeater to the base station after the completion of the initial access and/or the start of signal forwarding, the base station determines that the repeater has ceased forwarding the signal between the base station and the user equipment, and ceases transmitting the downlink signal to the repeater, and determines the downlink signal not successfully transmitted, and after the communication between the base station and the repeater is recovered, the base station transmits the downlink signal that was not successfully transmitted to the repeater. The repeater forwards the downlink signal received to the user equipment.

With above solutions, when the signal is forwarded between the UE and the base station by the repeater, since a physical random access channel can indicate whether a link between the base station and the repeater is affected, after determining that the repeater transmits the physical random access channel to the base station, the repeater will cease forwarding the signal between the base station and the UE in order to avoid affecting the signal between the base station and the UE that is forwarded by the repeater, thereby improving the accuracy of the signal transmission.

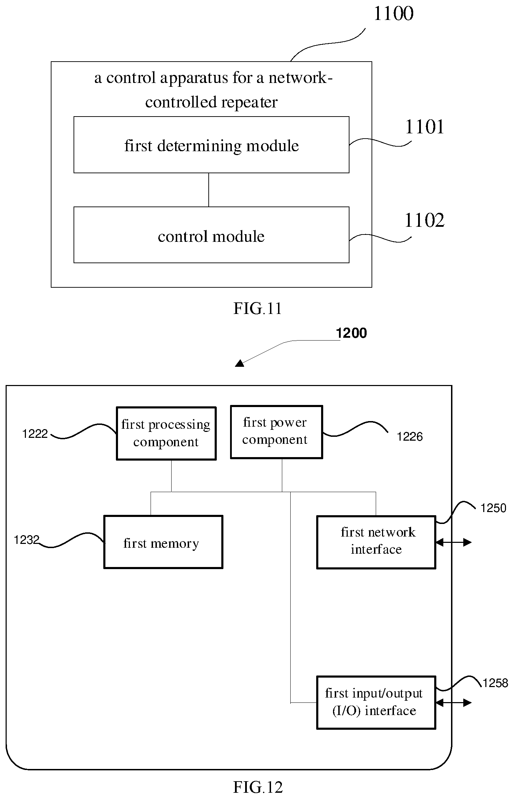

FIG. 11 is a control apparatus for a network-controlled repeater according to an illustrative embodiment. The network-controlled repeater is configured to forward a signal between a base station and a user equipment. As shown in FIG. 11. The apparatus 1100 includes a first determining module 1101 and a control module 1102.

The first determining module 1101 is configured to determine that the repeater transmits a physical random access channel to the base station.

The control module 1102 is configured to cause the repeater to cease forwarding the signal between the base station and the user equipment.

Optionally, the first determining module 1101 includes a first determining submodule.

The first determining submodule is configured to determine, after the repeater completes an initial access and/or starts a signal forwarding, to transmit the physical random access channel to the base station.

The physical random access channel is configured to recover a control link between the repeater and the base station.

Optionally, the control module 1102 includes a first control submodule.

The first control submodule is configured to cause the repeater to cease forwarding the signal between the base station and the user equipment on all carrier components.

Optionally, the repeater comprises a mobile terminal unit and a forwarding unit, and the control module 1102 includes a second control submodule.

The second control submodule is configured to cease forwarding the signal between the base station and the user equipment on a first carrier component used by the mobile terminal unit; and to continue to forward the signal between the base station and the user equipment on carrier components other than the first carrier component.

Optionally, the apparatus 1100 also includes a second determining module.

The second determining module is configured to determine that a beam used by the mobile terminal unit and a beam used by the forwarding unit are different, before cease forwarding the signal between the base station and the user equipment on a first carrier component used by the mobile terminal unit.

Optionally, the repeater transmitting the physical random access channel and the repeater forwarding the signal between the base station and the user equipment on the carrier components other than the first carrier component are performed simultaneously.

Optionally, the apparatus 1100 also includes a third determining module.

The third determining module is configured to determine that a beam used by the mobile terminal unit and a beam used by the forwarding unit are the same, before causing the repeater to cease forwarding the signal between the base station and the user equipment.

Optionally, the apparatus 1100 also includes a fourth determining module.

The fourth determining module is configured to determine that a carrier component used by the mobile terminal unit and a carrier component used by the forwarding unit are the same, before causing the repeater to cease forwarding the signal between the base station and the user equipment.

Regarding the apparatus in the embodiments above, specific modes in which each module performs operation(s) has been described in detail in the embodiments related to the method, and will not be described in detail here.

Based on the same idea of invention, a communication apparatus for a base station is provided, which includes a response module.

The response module is configured to determine that the network-controlled repeater does not forward a signal between the base station and a user equipment, in response to receiving a physical random access channel transmitted by a network-controlled repeater.

Optionally, the response module is configured to determine that the repeater ceases forwarding the signal between the base station and the user equipment in response to transmitting the physical random access channel to the base station after the repeater completes an initial access and/or starts a signal forwarding.

Regarding the apparatus in the embodiments above, specific modes in which each module performs operation(s) has been described in detail in the embodiments related to the method, and will not be described in detail here.

As shown in FIG. 12, an embodiment of the present disclosure provides a control apparatus for a network-controlled repeater. For example, the apparatus 1200 is provided as a repeater. Referring to FIG. 12, the apparatus 1200 includes a first processing component 1222, which further includes one or more the first processors, and memory resources represented by a first memory 1232 for storing instructions executable by the first processing component 1222, such as an application program. The application program stored in the first memory 1232 may include one or more modules each corresponding to a set of instructions. In addition, the first processing component 1222 is configured to execute instructions to perform the control method for the repeater side above.

The apparatus 1200 may further include a first power component 1226 configured to perform power management of the apparatus 1200, a wired or wireless first network interface 1250 configured to connect the apparatus 1200 to a network, and a first input/output (I/O) interface 1258. The apparatus 1200 may operate based on an operating system stored in the first memory 1232, such as Windows Server^{™}, Mac OS X^{™}, Unix^{™}, Linux^{™}, FreeBSD^{™}, or the like.

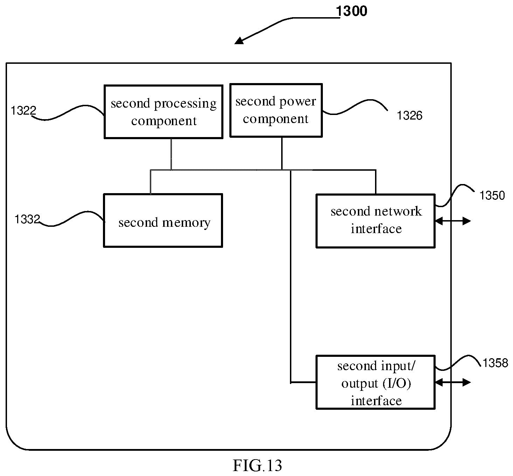

FIG. 13 is a block diagram of a communication apparatus for a base station according to an illustrative embodiment. For example, the apparatus 1300 may be provided as a base station. Referring to FIG. 13, the apparatus 1300 includes a second processing component 1322, which further includes one or more the second processors, and memory resources represented by a second memory 1332 for storing instructions executable by the second processing component 1322, such as an application program. The application program stored in the second memory 1332 may include one or more modules each corresponding to a set of instructions. In addition, the second processing component 1322 is configured to execute instructions to perform the method for the base station side above.

The apparatus 1300 may further include a second power component 1326 configured to perform power management of the apparatus 1300, a wired or wireless second network interface 1350 configured to connect the apparatus 1300 to a network, and a second input/output (I/O) interface 1358. The apparatus 1300 may operate based on an operating system stored in the second memory 1332, such as Windows Server^{™}, Mac OS X^{™}, Unix^{™}, Linux^{™}, FreeBSD^{™}, or the like.

An embodiment of the present disclosure also provides a computer program product. The computer program product includes computer programs executable by a programmable device and when executed by the programmable device, may implement the control method for a network controlled repeater or the communication method for the base station.

Embodiments of the present disclosure further provide a computer storage medium. The computer storage medium stores a computer program instructions. When the program instructions are executed by a third processor, steps of the control method for a network controlled repeater or the communication method for the base station of any embodiment of the present disclosure are implemented.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as illustrative only, with a true scope and spirit of the present disclosure being indicated by the scope of the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the scope of the appended claims.

## Claims

1. A control method for a network-controlled repeater, wherein the repeater is configured to forward a signal between a base station and a user equipment, comprising:
determining that the repeater transmits a physical random access channel to the base station; and
causing the repeater to cease forwarding the signal between the base station and the user equipment.

2. The control method according to claim 1, wherein determining that the repeater transmits the physical random access channel to the base station further comprises:
determining, after the repeater completes an initial access and/or starts a signal forwarding, to transmit the physical random access channel to the base station,
wherein the physical random access channel is configured to recover a control link between the repeater and the base station.

3. The control method according to claim 1, wherein causing the repeater to cease forwarding the signal between the base station and the user equipment comprises:
causing the repeater to cease forwarding the signal between the base station and the user equipment on all carrier components.

4. The control method according to claim 1, wherein the repeater comprises a mobile terminal unit and a forwarding unit, and causing the repeater to cease forwarding the signal between the base station and the user equipment comprises:
ceasing forwarding the signal between the base station and the user equipment on a first carrier component used by the mobile terminal unit; and continuing to forward the signal between the base station and the user equipment on carrier components other than the first carrier component.

5. The control method according to claim 4, wherein before cease forwarding the signal between the base station and the user equipment on a first carrier component used by the mobile terminal unit, the control method further comprises:
determining that a beam used by the mobile terminal unit and a beam used by the forwarding unit are different.

6. The control method according to claim 4, wherein the repeater transmitting the physical random access channel and the repeater forwarding the signal between the base station and the user equipment on the carrier components other than the first carrier component are performed simultaneously.

7. The control method according to claim 4, wherein before causing the repeater to cease forwarding the signal between the base station and the user equipment, the control method further comprises:
determining that a beam used by the mobile terminal unit and a beam used by the forwarding unit are the same.

8. The control method according to claim 4, wherein before causing the repeater to cease forwarding the signal between the base station and the user equipment, the control method further comprises:
determining that a carrier component used by the mobile terminal unit and a carrier component used by the forwarding unit are the same.

9. A communication method for a base station, comprising:
in response to receiving a physical random access channel transmitted by a network-controlled repeater, determining that the network-controlled repeater does not forward a signal between the base station and a user equipment.

10. The communication method according to claim 9, wherein in response to receiving the physical random access channel transmitted by the network-controlled repeater, determining that the network-controlled repeater does not forward the signal between the base station and the user equipment comprises:
in response to the repeater transmitting the physical random access channel to the base station after completing an initial access and/or starting a signal forwarding, determining that the repeater ceases forwarding the signal between the base station and the user equipment.

11. A control apparatus for a network-controlled repeater, wherein the network-controlled repeater is configured to forward a signal between a base station and a user equipment, and the control apparatus comprises:
a first determining module configured to determine that the repeater transmits a physical random access channel to the base station; and
a control module configured to cause the repeater to cease forwarding the signal between the base station and the user equipment.

12. A communication apparatus for a base station, comprising:
a response module configured to: in response to receiving a physical random access channel transmitted by a network-controlled repeater, determine that the network-controlled repeater does not forward a signal between the base station and a user equipment.

13. A control apparatus for a network-controlled repeater, comprising:
a first processor; and
a first memory for storing instructions executable by the processor;
wherein the first processor is configured to execute the instructions to implement the control method according to any one of claims 1 to 8.

14. A communication apparatus for a base station, comprising:
a second processor; and
a second memory for storing instructions executable by the processor;
wherein the second processor is configured to execute the instructions to implement the communication method according to claims 9 or 10.

15. A non-transitory computer storage medium, wherein the non-transitory computer storage medium has stored an executable program that, when executed by a third processor, causes the control method according to any one of claims 1 to 8 or the communication method according to claims 9 or 10 to be implemented by the third processor.
